# EUROPÄISCHE PATENTSCHRIFT

(11) **EP 2 356 196 B1**
(45) Veröffentlichungstag und Bekanntmachung des Hinweises auf die Patenterteilung: **13.02.2013**
(21) Anmeldenummer: 09764751.5
(22) Anmeldetag: 26.10.2009
(51) Int. Cl.: C09K 11/59

(54) **ROT EMITTIERENDER SR2SI5N8 LEUCHTSTOFF UND LICHTQUELLE MIT DERARTIGEM LEUCHTSTOFF SOWIE VERFAHREN ZUR HERSTELLUNG DES LEUCHTSTOFFS**
SR2S15N8 LUMINOUS SUBSTANCE EMITTING RED AND LIGHT SOURCE COMPRISING A LUMINOUS SUBSTANCE OF SAID KIND AND METHOD FOR PRODUCING THE LUMINOUS SUBSTANCE
MATÉRIAU LUMINESCENT SR2S15N8 ÉMETTANT DANS LE ROUGE ET SOURCE DE LUMIÈRE AVEC LEDIT MATÉRIAU LUMINESCENT ET PROCÉDÉ DE FABRICATION DU MATÉRIAU LUMINESCENT

(30) Priorität: 20.11.2008 DE 102008058295
(43) Veröffentlichungstag der Anmeldung: 17.08.2011
(73) Patentinhaber: OSRAM GmbH, 81543 München (DE)
(72) Erfinder: BECKER, Daniel, 86199 Augsburg (DE); FIEDLER, Tim, 81369 München (DE); JERMANN, Frank, 86343 Königsbrunn (DE); POHL, Bianca, 81379 München (DE)
(86) Internationale Anmeldenummer: PCT/EP2009/064072
(87) Internationale Veröffentlichungsnummer: WO 2010/057745

(56) Entgegenhaltungen:
- EP-A1- 1 571 194
- EP-A1- 1 878 778
- WO-A2-2005/031797
- US-A1- 2006 220 520
- RONG-JUN XIE; HIROSAKI N; SUEHIRO T; FANG-FANG XU; MITOMO M: "A simple, efficient synthetic route to Sr2Si5N8:Eu<2+>-based red phosphors for white light-emitting diodes" CHEMISTRY OF MATERIALS, Bd. 18, Nr. 23, 19. Oktober 2006 (2006-10-19), Seiten 5578-5583, XP002566453 DOI: 10.1021/cm061010n

## Beschreibung

### Technisches Gebiet

Die Erfindung geht aus von einem rot emittierenden Leuchtstoff aus der Klasse der Nitrido-Silikate gemäß dem Oberbegriff des Anspruchs 1. Des weiteren betrifft die Erfindung eine Lichtquelle mit einem derartigen Leuchtstoff und ein Verfahren zur Herstellung des Leuchtstoffs. Die Lichtquelle ist insbesondere eine Konversions-LED. Derartige Leuchtstoffe sind insbesondere für die Anwendung bei weißen LEDs gedacht.

### Stand der Technik

Die WO 01/40403 zeigt eine Konversions-LED, bei der eine Konversions-LED einen rot emittierenden Leuchtstoff aus der Klasse der Nitridosilikate verwendet. Es handelt sich dabei um den Leuchtstoff MxSiyNz:Eu, wobei M durch Ca, Sr, Ba und/oder Zn repräsentiert ist. Dabei gilt, dass z = 2/3 x + 4/3 y. Prominenteste Vertreter sind M2Si5N8:Eu und MSi7N3:Eu.

Aus dem Paper Rong-Jun Xie et al: "A simple, effizient synthetic route to Sr2Si5N8:Eu2+ -based red phosphors for white light-emitting diodes" CHEMISTRY OF MATERIALS Bd. 18, Hr. 23, 19 Okt 2006, Seiten 5578-5583 ist ein Nitridosilikat Sr2Si5N8:Eu2 bekannt, dem ein Orthosilikat Sr2SiO4 zugemischt ist. Aus der EP 1571 194 ist ein Verfahren zur Synthese eines oxinitridischen Leuchtstoffs bekannt, bei dem SrN2, Si3N4, SiO2 und Eu2O3 gemischt werden, um einen Leuchtstoffe des Typs MSi202N2 zu erzeugen.

### Darstellung der Erfindung

Die Aufgabe der vorliegenden Erfindung ist es, einen rot emittierenden Leuchtstoff anzugeben, der sich durch hohe Stabilität auszeichnet, und daher auch in thermisch belasteter Umgebung gut verwendet werden kann. Eine weitere Aufgabe ist es, eine Lichtquelle mit einem Leuchtstoff mit diesen Eigenschaften anzugeben und ein Verfahren zur Herstellung des Leuchtstoffs anzugeben.

Diese Aufgabe wird gelöst durch die kennzeichnenden Merkmale des Anspruchs 1 bzw. 6 bzw. 14.

Besonders vorteilhafte Ausgestaltungen finden sich in den davon abhängigen Ansprüchen.

Der neuartige Leuchtstoff ist ein modifiziertes, bevorzugt Eu²⁺-dotiertes, Erdalkali-Nitridosilikat M₂Si₅N₈ mit M = ein oder mehrere Elemente aus der Gruppe Sr, Ca, Ba, wobei das Nitridosilikat durch eine, insbesondere erdalkalihaltige, oxidische Phase stabilisiert ist. Der Leuchtstoff sichert damit die Bereitstellung eines effizienten, durch blaues oder ultraviolettes Licht anregbaren stabilisierten emittierenden Rotleuchtstoff mit einer dominanten Wellenlänge im Bereich um 600 nm.

Die Eu²⁺-dotierten Erdalkali-Nitridosilikate M₂Si₅N₈ mit M = ein oder mehrere Elemente aus der Gruppe Sr, Ca, Ba bilden ein seit längerem bekanntes rot-emittierendes Leuchtstoffsystem. Allerdings ist vor allem das bezüglich seiner dominanten Wellenlänge von ca. 600 nm - 610 nm äußerst interessante Sr₂Si₅N₈ durch seine chemische Instabilität bei höheren Temperaturen (> 100°C), Oxidation und hoher Strahlungsbelastung in seinen Anwendungen limitiert.

Ein konkurrierendes System wie das des CaAlSiN₃ zeigt zwar keine Schwächen bezüglich der Emissionsstabilität, ist aber aufgrund des engen nutzbaren Bereichs an Emissionswellenlängen von 615 nm bis 620 nm für viele Anwendungen nicht einsetzbar.

Für ein rot emittierendes Leuchtstoff-System mit hoher Stabilität auch bei hoher Temperaturbelastung ist somit bisher keine vollständig zufriedenstellende Lösung bekannt.

Für die Präparation von bekanntem M₂Si₅N₈ benötigt man M₃N₂, Si₃N₄ und Eu₂O₃ als Ausgangssubstanzen. Ein neuartiges stabilisiertes Erdalkali-Nitridosilikat erhält man, wenn man die Eduktseite zumindest um SiO₂ erweitert. Es entsteht eine Ansatzmischung, die stöchiometrisch nicht mehr M₂Si₅N₈ ergibt, sondern ein modifiziertes Eu²⁺- dotiertes Erdalkali-Nitridosilikat M₂Si₅N₈ mit M = ein oder mehrere Elemente aus der Gruppe Sr, Ca, Ba ist, wobei das Nitridosilikat zumindest durch eine zweite oxidische Phase, insbesondere durch SiO2, stabilisiert ist. Insbesondere ist die Eduktseite um Si02 und zusätzlichem M3N2 erweitert.

In einer speziellen Ausführungsform folgt das dabei entstehende Produkt der Stöchiometrie (1-a) (M₂Si₅N₈:Eu)_{*}a(SiO₂), wobei bevorzugt gilt dass 0<a<0,25.

In einer weiteren speziellen Ausführungsform folgt das dabei entstehende Produkt der Stöchiometrie (1-ab) (M₂Si₅N₈:Eu)_{*}a (SiO₂)_{*}b (M' 3N2), wobei bevorzugt gilt dass 0<a<0,25 und 0 ≤ b ≤ 0,30. Dabei ist M' insbesondere verschieden vom verwendeten M, beispielsweise ist M=Sr und M'=Ca. Insbesondere ist dabei a und b so gewählt, dass letztlich ein Produkt der Form (M₂Si₅N₈:Eu)_{*}(M'₃Si₂O₄N₂:Eu) entsteht (M'= ein oder mehrere Elemente aus der Gruppe Sr, Ca, Ba).

Im allgemeinen entsteht jedoch als Produkt keine einfache Stöchiometrie, vielmehr muss zur Beschreibung des Produkts ein Phasendiagramm herangezogen werden, das auf den drei Teilkomponenten SiN4/3, Si02 und MN2/3 basiert.

Bevorzugt wird dabei M zu mehr als 50 Mol.-% durch Sr repräsentiert.

Generell sollte der Anteil des gesamten Dotiermittels, insbesondere hier Eu, an M im Bereich 0,1 bis 15 Mol.-% liegen. Ein anderer oder zusätzlicher Dotierstoff wie beispielsweise Ce oder Mn ist dabei nicht ausgeschlossen. Insbesondere sind interessante Systeme Eu, Mn einerseits und Ce, Li (mit oder ohne Eu) andererseits. Im letzteren Fall dient Li der Ladungskompensation.

Der Leuchtstoff eignet sich insbesondere für photonische Anregung durch eine Lichtquelle. Das sind beispielsweise Lampen wie Leuchtstofflampen oder Hochdruckentladungslampen, aber insbesondere auch Konversions-LED. Der Leuchtstoff kann hier insbesondere für die Erzeugung von weißem Licht eingesetzt werden. Üblicherweise wird dabei das RGB-Prinzip angewendet. Dabei wird für die rote Emission der erfindungsgemäße Leuchtstoff verwendet. Für die grüne Emission wird ein weiterer Leuchtstoff wie beispielsweise ein Sion, insbesondere Ba-Sion wie an sich bekannt, verwendet. Für die blaue Emission eignet sich am besten die Primärstrahlung einer blau emittierenden LED, bevorzugt ist eine Peakwellenlänge von 410 bis 500 nm.

Im Falle einer Peakwellenlänge von 410 bis 430 nm kann zusätzlich ein blauer Leuchtstoff wie BAM verwendet werden. Im Falle einer langwelligen Anregung im Bereich 470 bis 500 nm kann die Anregung durch die sekundäre Strahlung eines anderen Leuchtstoffs erfolgen.

Bevorzugt liegen die relativen Anteile im Phasendreieck SiN4/3, Si02, MN2/3 in einem Bereich mit den folgenden Eckpunkten, wobei die Summe jeweils zu 100 Mol.-% aufaddiert:

| | | |
|---|---|---|
| (1) | SiO_{2 :} SiN_{4/3} : MN_{2/3} = | 7,5%: 67,5%: 25% |
| (2) | SiO₂ : SiN_{4/3} : MN_{2/3} = | 17, 5%: 57, 5%: 25% |
| (3) | SiO₂ : SiN_{4/3} : MN_{2/3} = | 7,5% : 47, 5%: 45% |
| (4) | SiO₂ : SiN_{4/3} : MN_{2/3} = | 17, 5%: 37, 5%: 45%. |

Besonders bevorzugt gilt:

| | | |
|---|---|---|
| (1) | SiO₂ : SiN_{4/3} : MN_{2/3} = | 10% : 65% : 25% |
| (2) | SiO₂ : SiN_{4/3} : MN_{2/3} = | 15% : 60% : 25% |
| (3) | SiO₂ : SiN_{4/3} : MN_{2/3} = | 10% : 45% : 45% |
| (4) | SiO₂ : SiN_{4/3} : MN_{2/3} = | 15% : 40% : 45%. |

### Kurze Beschreibung der Zeichnungen

Im Folgenden soll die Erfindung anhand mehrerer Ausführungsbeispiele näher erläutert werden. Die Figuren zeigen:

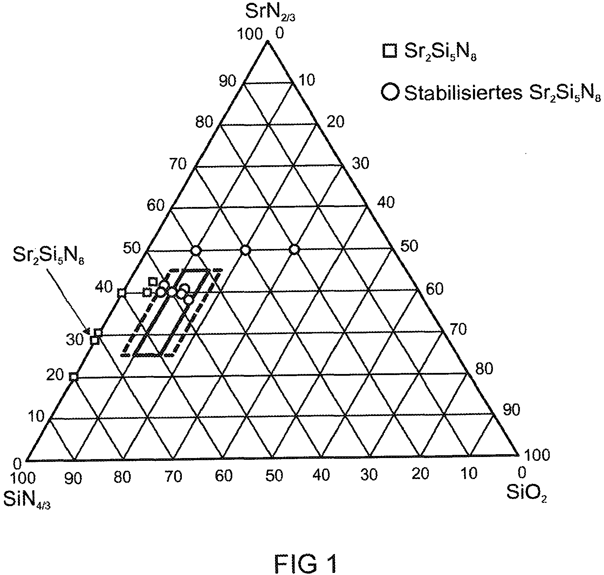

- Figur 1: ein Phasendiagramm, das bekannte und neuartige stabilisierte Nitridosilikate lokalisiert;
- Figur 2: Pulverdiffraktogramm eines bekannten Nitridosilikats Sr2Si5N8:Eu;
- Figur 3: Pulverdiffraktogramm eines stabilisierten Nitridosilikats Sr2Si5N8:Eu * nSiO2;
- Figur 4: den relativen Verlust an Quanteneffizienz nach Oxidationstest für die beiden Leuchtstoffe aus Figur 2 und 3;
- Figur 5: das Ergebnis eines Belastungstest unter hoher Bestrahlungsstärke für die beiden Leuchtstoffe aus Figur 2 und 3;
- Figur 6: die Messung des Quenching-Verhaltens für die beiden Leuchtstoffe aus Figur 2 und 3 als Funktion der Temperatur;
- Figur 7: die Anregbarkeit verschiedener Leuchtstoffe als Funktion der Wellenlänge;
- Figur 8: den Verlust an Effizienz einer Konversions-LED als Funktion der Zeit.
- Figur 9: eine Konversions-LED in schematischer Darstellung;
- Figur 10: den Konverter-Verlust in Prozent für ein stabilisiertes Nitrid;
- Figur 11: den Konverter-Verlust in Prozent für ein nicht stabilisiertes Nitrid;
- Figur 12: das Spektrum für eine LED mit stabilisiertem Nitrid;
- Figur 13: das Spektrum für eine LED mit nicht stabilisiertem Nitrid.

### Bevorzugte Ausführungsform der Erfindung

Ausführungsbeispiele für den neuartigen rot emittierenden Leuchtstoff sind wie folgt. Dabei liegt die resultierende dominante Emissionswellenlänge im Bereich 595 bis 610 nm.

### a) Ansatzmischung 1, normales Nitridosilikat

8,7 g Sr₃N₂, 10,9 g Si₃N₄ und 0,3 g Eu₂O₃ werden unter Schutzgasatmosphäre eingewogen und homogenisiert. Anschließend wird die Eduktmischung für mehrere Stunden unter reduzierender Atmosphäre im Rohr- oder Kammerofen bei Temperaturen zwischen 1200°C und 1800°C geglüht. Darauf kann eine Zweitglühung, ebenfalls unter reduzierender Atmosphäre zwischen 1200°C und 1800°C, erfolgen.

### b) Ansatzmischung 2, stabilisiertes Nitridosilikat

10,9 g Sr₃N₂, 1,7 g SiO₂, 6,8 g Si₃N₄ und 0,4 g Eu₂O₃ werden unter Schutzgasatmosphäre eingewogen und homogenisiert. Anschließend wird die Eduktmischung für mehrere Stunden unter reduzierender Atmosphäre im Rohr- oder Kammerofen bei Temperaturen zwischen 1200°C und 1800°C geglüht. Darauf kann eine Zweitglühung, ebenfalls unter reduzierender Atmosphäre zwischen 1200°C und 1800°C, erfolgen.

### c) Ansatzmischung 3, stabilisiertes Nitridosilikat

11,5 g Sr₃N₂, 0,9 g SiO₂, 7,2 g Si₃N₄ und 0,4 g Eu₂O₃ werden unter Schutzgas-Atmosphäre eingewogen und homogenisiert. Anschließend wird die Eduktmischung für mehrere Stunden unter reduzierender Atmosphäre im Rohr- oder Kammerofen bei Temperaturen zwischen 1200°C und 1800°C geglüht. Darauf kann eine Zweitglühung, ebenfalls unter reduzierender Atmosphäre zwischen 1200°C und 1800°C, erfolgen.

### d) Ansatzmischung 4, stabilisiertes Nitridosilikat

10,7 g Sr₃N₂, 2,2 g SiO₂, 6,7 g Si₃N₄ und 0,4 g Eu₂O₃ werden unter Schutzgas-Atmosphäre eingewogen und homogenisiert. Anschließend wird die Eduktmischung für mehrere Stunden unter reduzierender Atmosphäre im Rohr- oder Kammerofen bei Temperaturen zwischen 1200°C und 1800°C geglüht. Darauf kann eine Zweitglühung, ebenfalls unter reduzierender Atmosphäre zwischen 1200°C und 1800°C, erfolgen.

### e) Ansatzmischung 5, stabilisiertes Nitridosilikat

8,8 g Sr₃N₂, 1,2 g Ca₃N₂, 2,7 g SiO₂, 6,9 g Si₃N₄ und 0,4 g Eu₂O₃ werden unter Schutzgasatmosphäre eingewogen und homogenisiert. Anschließend wird die Eduktmischung für mehrere Stunden unter reduzierender Atmosphäre im Rohr- oder Kammerofen bei Temperaturen zwischen 1200°C und 1800°C geglüht. Darauf kann eine Zweitglühung, ebenfalls unter reduzierender Atmosphäre zwischen 1200°C und 1800°C, erfolgen.

**Tab. 1: Farbort, Quanteneffizienz, Brightness**

| Probe | Ansatz | Eu (mol %) | x | Y | λ_{Dom} (nm) | Λ_{Sch} (nm) | Rel. Q.E. (%) | Rel. Brightness (%) |
|---|---|---|---|---|---|---|---|---|
| BP 001/07 | 1 | 2 | 0, 62 7 | 0,37 1 | 600, 3 | 635, 2 | 100 | 100 |
| BP 047/07KO | 2 | 2 | 0,62 7 | 0,37 2 | 600, 1 | 631, 2 | 101 | 105 |
| BP 075/07 | 3 | 2 | 0,62 6 | 0,37 3 | 599, 9 | 631, 2 | 95 | 101 |
| BP 084/07 | 4 | 2 | 0, 62 6 | 0,37 2 | 600, 1 | 631, 6 | 101 | 105 |
| BP 059/08 | 5 | 2 | 0, 63 8 | 0,36 1 | 602, 6 | 644, 1 | 103 | 112 |

Bewegt man sich allgemein ausgehend vom M₂Si₅N₈-Punkt in Richtung der gestrichelten Linie, sinkt zunächst die Quanteneffizienz drastisch ab, bevor sie an der Grenzlinie des markierten Bereiches wieder ansteigt. Am Beispiel M = Sr soll dies exemplarisch verdeutlicht werden. Hier ist bevorzugt M überwiegend zu mehr als 50 Mol.-%, besonders bevorzugt ist M =Sr. Der Anteil des Eu an M liegt bevorzugt bei 0,1 bis 15 Mol.-%. Bevorzugt ist daher der - im Phasendreieck durch die gestrichelte Linie gekennzeichnete - exemplarische Bereich mit den Eckpunkten (in Klammern ist die zugehörige formelle Stöchiometrie angegeben):

| | |
|---|---|
| (1) SiO₂ : SiN_{4/3} : SrN_{2/3} | = 7 , 5% : 6 7 , 5% : 2 5 % (Sr_{2,5}Si_{7,5}O_{1,5}N_{10,67}) |
| (2) SiO₂ : SiN_{4/3} : SrN_{2/3} | = 17, 5% : 57, 5%: 25% (Sr_{2,5}Si_{7,5}O_{3,5}N_{9,33}) |
| (3) SiO₂ : SiN_{4/3} : SrN_{2/3} | = 7,5% : 47, 5%: 45% (Sr_{4,5}Si_{5,5}O_{1,5}N_{9,33}) |
| (4) SiO₂ : SiN_{4/3} : SrN_{2/3} | = 17,5%: 37,5%: 45% (Sr_{4,5}Si_{5,5}O_{3,5}N₈). |

der sich durch einen relativen Verlust von < 40 % bezüglich der Quanteneffizienz der besten stabilisierten Sr₂Si₅N₈-Probe auszeichnet.

Mit Quanteneffizienzen von mehr als 70 % ist der durch die durchgezogene Linie gekennzeichnete Bereich besonders zu bevorzugen. Das Rechteck wird hier beschrieben durch folgende Eckpunkte:

| | | |
|---|---|---|
| (A) SiO₂ : SiN_{4/3} : SrN_{2/3} | = | 10% : 65% : 25% (Sr_{2,5}Si_{7,5}O₂N_{10,33}) |
| (B) SiO₂ : SiN_{4/3} : SrN_{2/3} | = | 15% : 60% : 25% (Sr_{2,5}Si_{7,5}O₃N_{9,67}) |
| (C) SiO₂ : SiN_{4/3} : SrN_{2/3} | = | 10% : 45% : 45% (Sr_{4,5}Si_{5,5}O₂N₉) |
| (D) SiO₂ : SiN_{4/3} : SrN_{2/3} | = | 15% : 40% : 45%. (Sr_{4,5}Si_{5,5}O₃N_{8,33}) |

**Tab. 2: Lagen der wichtigsten Reflexe der neuen Phase**

| No. | 2theta/TOF (+/- 0,2) | I_{obs} |
|---|---|---|
| | | |
| 1 | 22,7 | Schwach |
| 2 | 24,8 | Schwach |
| 3 | 29,6 | Schwach |
| 4 | 32,4 | Stark |
| 5 | 39,9 | Mittel |
| 6 | 46,5 | Mittel |
| 7 | 52,2 | Schwach |
| 8 | 57,7 | Mittel |

Durch die Zugabe von SiO₂ in der Ansatzmischung entsteht eine zweite Phase, die den Leuchtstoff M₂Si₅N₈:D, wobei D bevorzugt durch Eu repräsentiert ist, hinsichtlich all seiner limitierenden Eigenschaften deutlich verbessert und dabei in keiner Eigenschaft schwächt. Die entstehende Nebenphase ist eine bisher unbekannte, wahrscheinlich Oxinitridische Phase, die nach bisherigen Erkenntnissen in der Struktur von Ba₃Al₂O₆ (Raumgruppe Pa3 (Nr.205) und Gitterparameter a = 15,650(1)Å) kristallisiert..

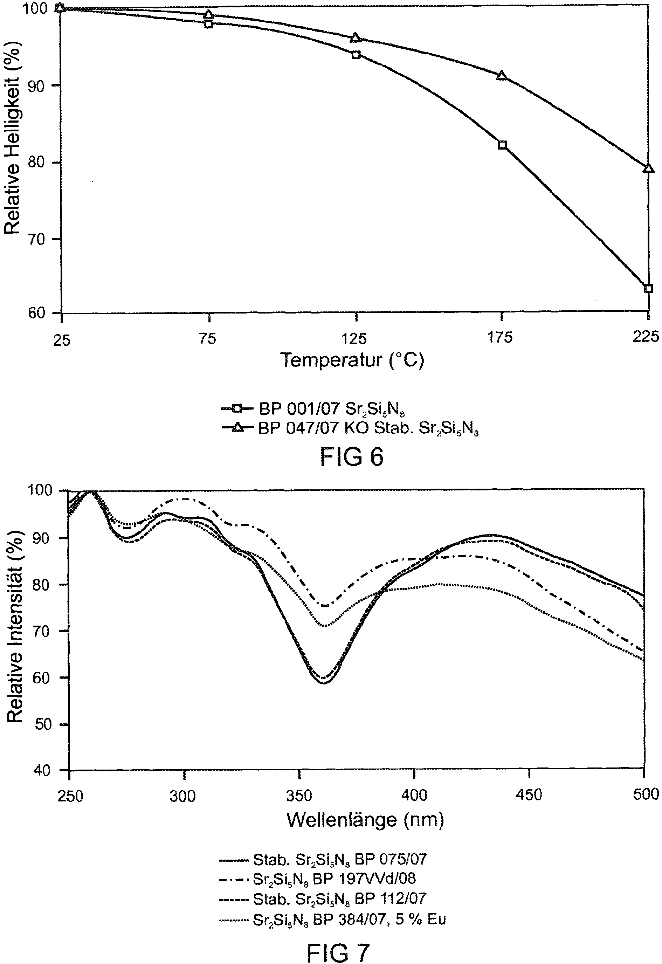

Figur 7 zeigt Unterschiede in der Anregbarkeit des normalen und stabilisierten Nitridosilikats auf. Während die Anregbarkeit des stabilisierten Eu-dotierten Sr₂Si₅N₈ bei einer Anregungswellenlänge von 360 nm stärker einbricht als die von normalem Sr₂Si₅N₈, weist ersteres zwischen 410 und 500 nm eine deutlich bessere Anregbarkeit auf, was gerade bei Anregung durch einen blauen LED-Chip von Vorteil ist.

Das in allen Belangen instabile Sr₂Si₅N₈ mit einer für viele Anwendungen günstigen dominanten Emissionswellenlänge von ca. 600 - 610 nm kann in allen o.g. Gesichtspunkten (Temperaturquenching, Laserstabilität, Oxidationsstabilität) stabilisiert werden, ohne an optischen Eigenschaften einzubüßen.

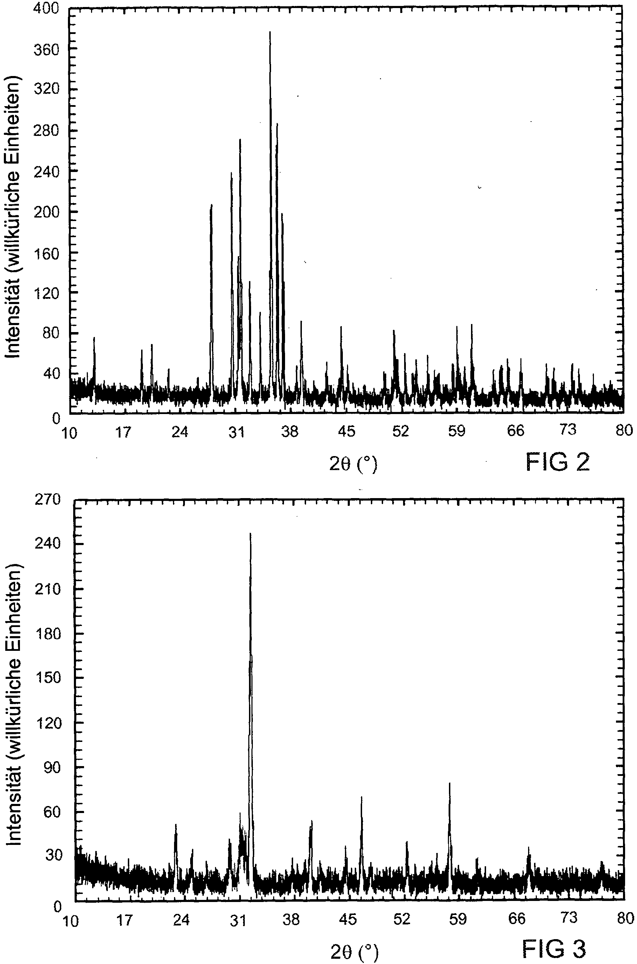

Figur 2 zeigt das Pulverdiffraktogramm von Sr-Nitridosilikat Sr2Si5N8:Eu wie an sich bekannt. Dagegen zeigt das Pulverdiffraktogramm von modifiziertem SiO2-stabilisertem Sr2Si5N8:Eu gemäß Figur 3 ganz andere Peaks.

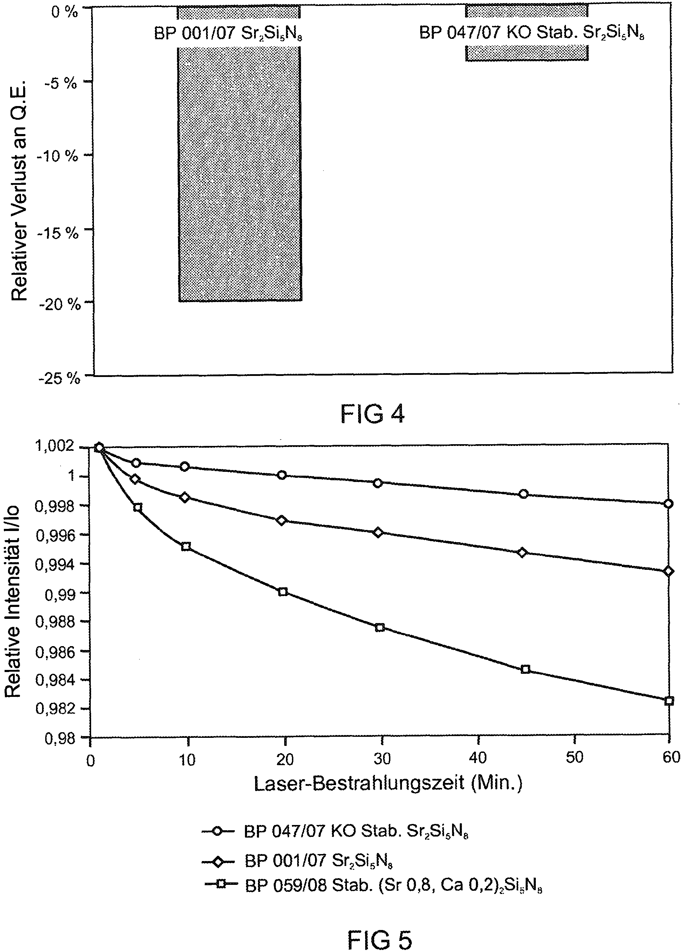

Figur 4 zeigt den relativen Verlust an Quanteneffizienz für normales und modifiziertes Sr-Nitridosilikat wie gemäß Figur 2 und 3.

Figur 5 zeigt die Stabilität für normales und modifiziertes Sr-Nitridosilikat wie gemäß Figur 2 und 3 unter hoher Belastung mit Laserstrahlung. Dabei ist die Zeitdauer der Belastung als Abszisse angegeben. Die Ordinate stellt die relative Intensität der Strahlung dar.

Figur 6 zeigt das Temperaturquenching für normales und modifiziertes Sr-Nitridosilikat wie gemäß Figur 2 und 3. dabei ist die Abszisse die Temperatur in Grad Celsius und die Ordinate die Helligkeit verglichen mit der Helligkeit bei 25°C, also ohne Temperaturbelastung.

Figur 7 zeigt die Anregbarkeit verschiedener Leuchtstoffe als Funktion der Wellenlänge der Anregung.

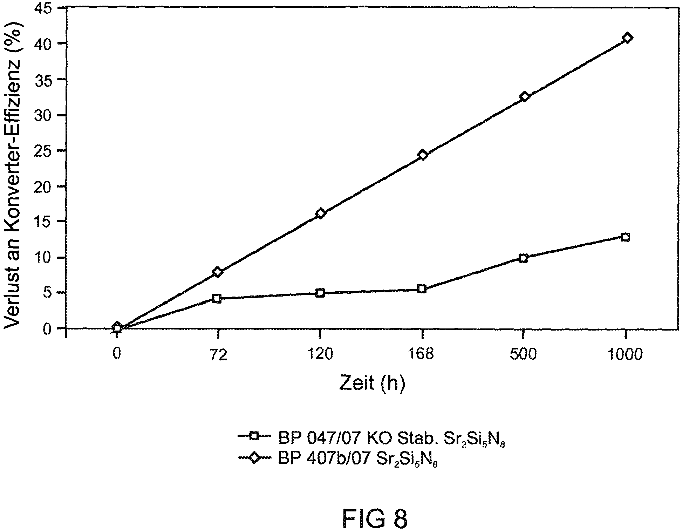

Figur 8 zeigt den Verlust an Konversionseffizienz des stabilisierten und normalen Sr2Si5N8:Eu als Funktion der Zeit (in Stunden). Dabei ist als Abszisse die Zeitdauer der Bestrahlung aufgetragen. Die Ordinate ist der prozentuale Verlust.

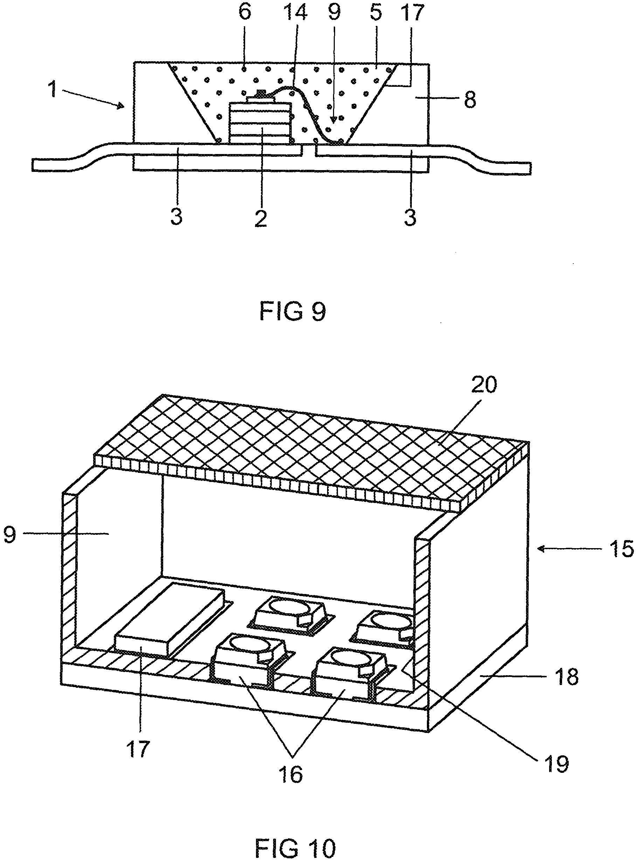

Gemäß Figur 9 weist eine Konversions-LED 1 einen Chip 2 auf, der die primäre Strahlung emittiert. In aller Regel ist die primäre Strahlung blau mit einer Peakwellenlänge im Bereich 420 bis 480 nm, bevorzugt 450 bis 470 nm. Es kann sich jedoch auch um eine UV-LED handeln, wobei in aller Regel die primäre Strahlung im Bereich 360 bis 420 nm liegt.

Der Chip ist mit elektrischen Anschlüssen 3 und einen Bonddraht 14 verbunden. Er ist von einem Gehäuse 8 umgeben, das als Reflektor 17 wirkt.

Auf dem Chip ist ein Verguss 5 aufgebracht, der eine Leuchtstoffmischung 6 als Dispersion enthält. Die Leuchtstoffe sind ein rot emittierender Leuchtstoff des Typs modifiziertes Nitridosilikat und ein gelb-grüner Leuchtstoff wie beispielsweise YAG:Ce oder ein Sion wie Ba-Si2O2N2:Eu enthält.

Alternativ zeigt Figur 10 ein Ausführungsbeispiel, bei dem mehrere LEDs 16 zusammen mit einer elektronischen Steuerung 17 in einem Modul 15 untergebracht sind, mit einer Basisplatte 18 und Wänden 19. Der Leuchtstoff ist hier auf der Innenseite der Wände oder nur auf der Deckplatte 20 angebracht.

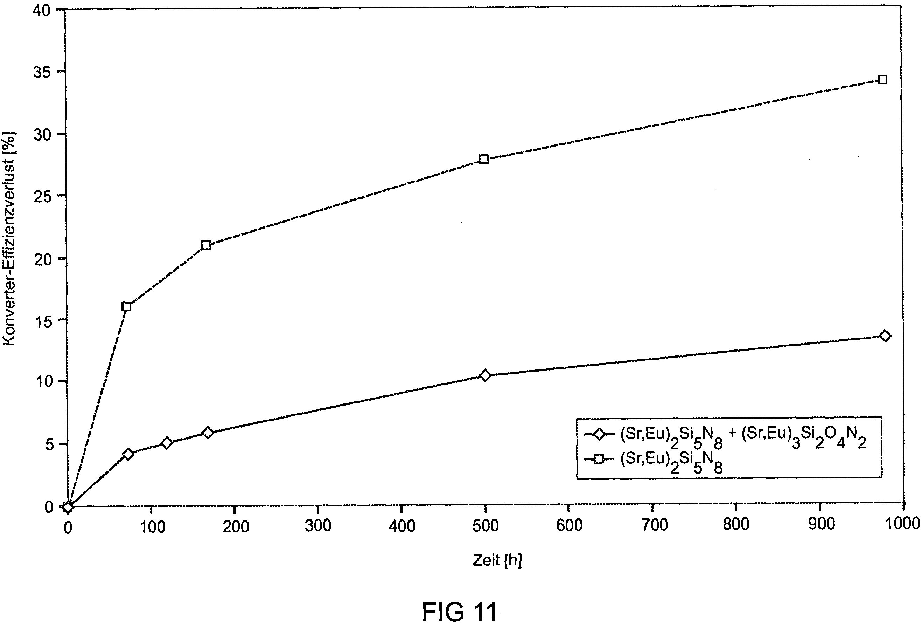

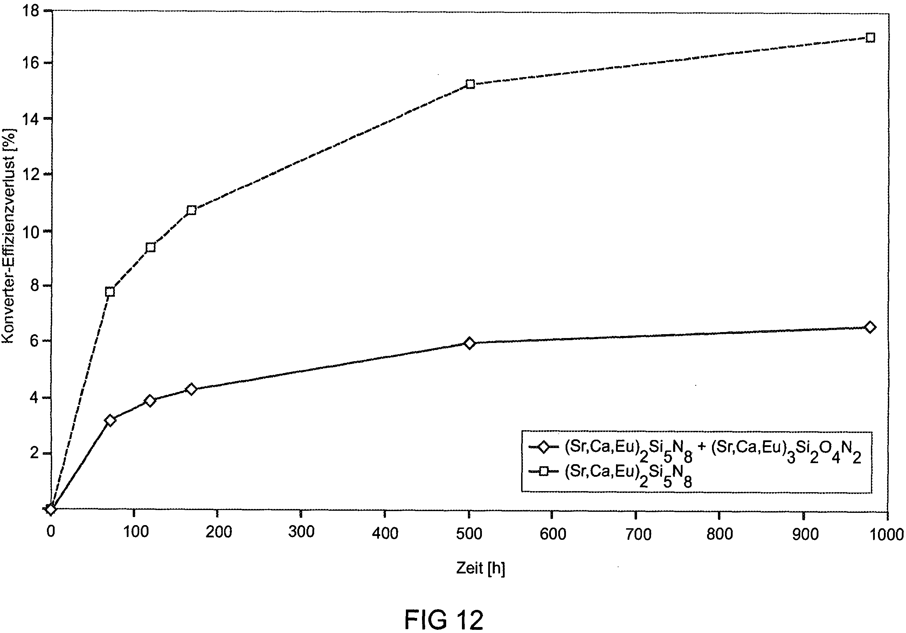

Figur 11 zeigt den Konverterverlust als Funktion der Zeit für ein stabilisiertes Nitrid, bei dem a=b. Dabei ist M=Sr und M'=Sr,Ca. die Stabilisierung ist erheblich besser als im Fall eines nicht stabilisierten gewöhnlichen Nitrids, dessen Konverterlust (in Prozent) in Figur 12 gezeigt ist.

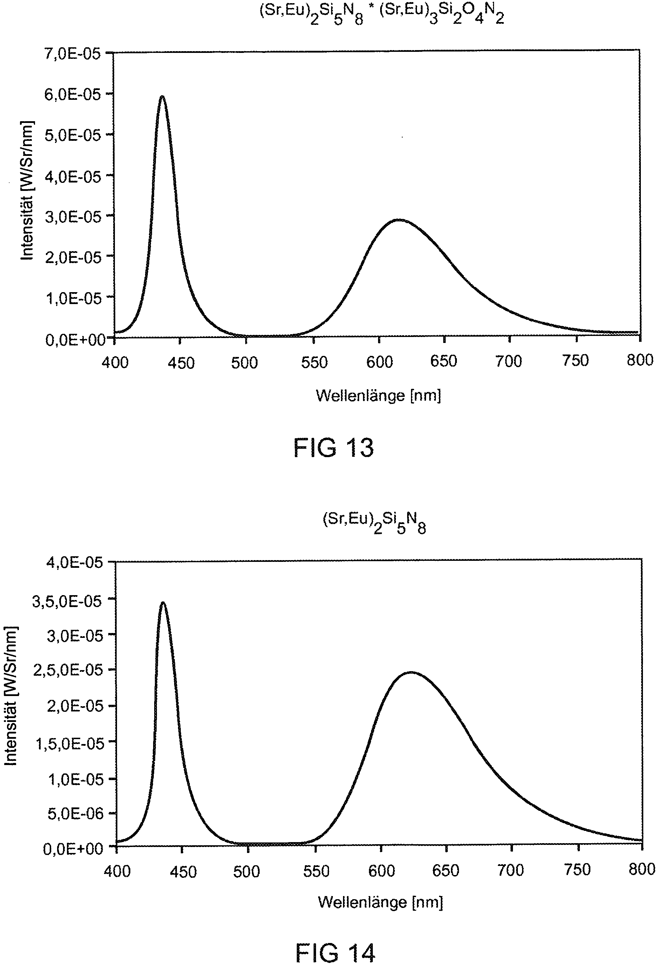

Figur 13 zeigt das Spektrum einer LED mit stabilisiertem Nitrid zu Beginn und nach Alterung. Die Stabilität ist erheblich höher als bei dem im Vergleich gezeigten Spektrum, siehe Figur 14, einer LED mit nicht-stabilisiertem Nitrid.

**Tab. 3: Farbort, Quanteneffizienz, Brightness**

| Probe | Typ | Eu (mol% ) | x | y | λ_{Dom} (nm) | Λ_{Sch} (nm ) | Rel. Q.E. (%) | Rel. Brightness (%) |
|---|---|---|---|---|---|---|---|---|
| BP 001/07 | Sr₂Si₅N₈ | 2 | 0, 62 7 | 0, 37 1 | 600, 3 | 635 ,2 | 100 | 100 |
| BP 047/07 KO | Stab. Sr₂Si₅N₈ | 2 | 0, 62 7 | 0,37 2 | 600, 1 | 631 ,2 | 101 | 105 |
| BP 048/07 KO | Stab. Sr₂Si₅N₈ | 10 | 0,65 6 | 0,34 3 | 607, 3 | 656 ,4 | 90 | 107 |
| BP 084/07 | Stab. Sr₂Si₅N₈ | 2 | 0,62 6 | 0,37 2 | 600, 1 | 631 ,6 | 101 | 105 |
| BP 084a/07 | Stab. Sr₂Si₅N₈ | 2 | 0,62 8 | 0,37 1 | 600, 3 | 632 ,6 | 98 | 107 |
| BP 059/08 | Stab. (Sr_{0,8}Ca_{0,2}) ₂ Si₅N₈ | 2 | 0,63 8 | 0,36 1 | 602, 6 | 644 ,1 | 103 | 112 |

**Tab. 4: Veränderungen nach Oxidationstest (68 h bei 150°C unter Luft-Atmosphäre)**

| | BP 001/07 | | BP 047/07 KO | |
|---|---|---|---|---|
| | Sr₂Si₅N₈ | | Stab. Sr₂Si₅N₈ | |
| | Vor Ox-Test | Nach Ox-Test | Vor Ox-Test | Nach Ox-Test |
| Rel. Quanteneffizienz (%) | 100 | 79,8 | 100 | 94, 7 |
| Farbort x / y | 0,627 / 0,371 | 0,626 / 0,372 | 0,627 / 0,372 | 0,626 / 0,372 |
| Dominanzwellenlänge (nm) | 600,3 | 600,1 | 600,1 | 600, 1 |
| Schwerpunktswellenlänge (nm) | 635,2 | 634,5 | 631,2 | 631,2 |
| Helligkeit zum Standard (%) | 100 | 76,0 | 100 | 89,5 |

## Patentansprüche

1. Rot emittierender Leuchtstoff aus der Klasse der Nitridosilikate, der mit mindestens einem Aktivator D, insbesondere Eu, dotiert ist, **dadurch gekennzeichnet, dass** er ein modifiziertes D-dotiertes Erdalkali-Nitridosilikat M₂Si₅N₈ mit M = ein oder mehrere Elemente aus der Gruppe Sr, Ca, Ba ist, wobei das Nitridosilikat entweder durch eine oxidische Phase SiO2 allein oder in Kombination mit M'3N2, mit M' = ein oder mehrere Erdalkali-Elemente aus der Gruppe Sr, Ca, Ba, als eine oxinitridische Phase stabilisiert ist.

2. Leuchtstoff nach Anspruch 1, **dadurch gekennzeichnet, dass** M zu mehr als 50 Mol.-% durch Sr repräsentiert ist.

3. Leuchtstoff nach Anspruch 1, **dadurch gekennzeichnet, dass** die relativen Anteile in einem Phasendreieck SiN4/3, Si02, MN2/3 in einem Bereich mit den folgenden Eckpunkten liegen:
| | | |
|---|---|---|
| (1) | SiO₂ : SiN_{4/3} : MN_{2/3} = | 7,5%: 67, 5%: 25% |
| (2) | SiO₂ : SiN_{4/3} : Min_{2/3} = | 17,5%: 57, 5%: 25% |
| (3) | SiO₂ : SiN_{4/3} : MN_{2/3} = | 7,5% : 47, 5%: 45% |
| (4) | SiO₂ : SiN_{4/3} : MN_{2/3} = | 17, 5%: 37, 5%: 45%. |

4. Leuchtstoff nach Anspruch 1, **dadurch gekennzeichnet, dass** die relativen Anteile in einem Phasendreieck SiN4/3, Si02, MN2/3 in einem Bereich mit den folgenden Eckpunkten liegen:
| | | |
|---|---|---|
| (1) | SiO₂ : SiN_{4/3} : MN_{2/3} = | 10% : 65% : 25% |
| (2) | SiO₂ : SiN_{4/3} : MN_{2/3} = | 15% : 60% : 25% |
| (3) | SiO₂ : SiN_{4/3} : MN_{2/3} = | 10% : 45% : 45% |
| (4) | SiO₂ : SiN_{4/3} : MN_{2/3} = | 15% : 40% : 45%. |

5. Leuchtstoff nach Anspruch 1, **dadurch gekennzeichnet, dass** der Anteil des Aktivators D an M im Bereich 0,1 bis 15 Mol.-% liegt.

6. Leuchtstoff nach Anspruch 1, **dadurch gekennzeichnet, dass** der stabilisierte Leuchtstoff die Stöchiometrie (1-ab) (M2Si5N8:D)*a(SiO2)*b(M'3N2) aufweist.

7. Lichtquelle, insbesondere Konversions-LED, mit einem Leuchtstoff nach Anspruch 1.

8. Konversions-LED nach Anspruch 7, **dadurch gekennzeichnet, dass** die Konversions-LED weiß emittiert.

9. Konversions-LED nach Anspruch 7, **dadurch gekennzeichnet, dass** der Leuchtstoff mittels einer Strahlung, deren Peak im Bereich 410 bis 500 nm liegt, angeregt wird, insbesondere 430 bis 465 nm.

10. Konversions-LED nach Anspruch 7, **dadurch gekennzeichnet, dass** die dominante Emissionswellenlänge des Leuchtstoffs im Bereich 595 bis 610 nm liegt.

11. Konversions-LED nach Anspruch 7, **dadurch gekennzeichnet, dass** für eine weiß emittierende LED ein zweiter Leuchtstoff verwendet wird, der im Gelb-Grünen emittiert.

12. Konversions-LED nach Anspruch 7, **dadurch gekennzeichnet, dass** der Leuchtstoff in die LED integriert ist, insbesondere in einer Vergussmasse eingebracht ist, die vor einen Chip gesetzt ist.

13. Konversions-LED nach Anspruch 7, **dadurch gekennzeichnet, dass** der Leuchtstoff separat auf einen Träger aufgebracht ist

14. Konversions-LED nach Anspruch 7, **dadurch gekennzeichnet, dass** der Chip primäre Strahlung im Bereich UV bis blau, insbesondere im Bereich 360 nm bis 480 nm, emittiert, wobei ggf. noch mindestens ein weiterer Leuchtstoff verwendet wird.

15. Verfahren zur Herstellung eines rot emittierender Leuchtstoffs aus der Klasse der Nitridosilikate, der mit einem Aktivator D dotiert ist und der ein modifiziertes dotiertes Erdalkali-Nitridosilikat M₂Si₅N₈ mit M = ein oder mehrere Elemente aus der Gruppe Sr, Ca, Ba ist, und mit M' = ein oder mehrere Elemente aus der Gruppe Sr, Ca, Ba ist, wobei das Nitridosilikat entweder durch eine oxidische Phase SiO2 allein oder in Kombination mit M' 3N2, mit M' = ein oder mehrere Erdalkali-Blemente aus der Gruppe Sr, Ca, Ba, als eine oxinitridische Phase stabilisiert ist, **dadurch gekennzeichnet, dass** die Edukte M3N2, Si3N4, SiO2 und ggf. M'3N2 sowie ein Vorläufer des Aktivators D in reduzierender Atmosphäre bei Temperaturen von mindestens 1200 °C geglüht werden.

## Claims

1. Red-emitting phosphor from the class of nitridosilicates which is doped with at least one activator D, in particular Eu, **characterized in that** it is a modified D-doped alkaline earth metal nitridosilicate M₂Si₅N₈ where M = one or more elements from the group Sr, Ca, Ba, the nitridosilicate being stabilized either by an oxidic phase SiO₂ alone or in combination with M`₃N₂, where M' = one or more alkaline earth metal elements from the group Sr, Ca, Ba, as an oxynitridic phase.

2. Phosphor according to Claim 1, **characterized in that** M is represented by Sr to the extent of more than 50 mol%.

3. Phosphor according to Claim 1, **characterized in that** the relative proportions in a phase triangle SiN_{4/3}, SiO₂, MN_{2/3} are in a range having the following corner points:
(1) SiO₂: SiN_{4/3} : MN_{2/3} = 7.5% : 67.5%: 25%
(2) SiO₂ : SiN_{4/3} : MN_{2/3} = 17.5% : 57.5%: 25%
(3) SiO₂ : SiN_{4/3} : MN_{2/3} = 7.5% : 47.5%: 45%
(4) SiO₂: SiN_{4/3} : MN_{2/3} = 17.5% : 37.5%: 45%.

4. Phosphor according to Claim 1, **characterized in that** the relative proportions in a phase triangle SiN_{4/3}, SiO₂, MN_{2/3} are in a range having the following corner points:
(1) SiO₂ : SiN_{4/3} : MN_{2/3} = 10% : 65%: 25%
(2) SiO₂ : SiN_{4/3} : MN_{2/3} = 15% : 60%: 25%
(3) SiO₂ : SiN_{4/3} : MN_{2/3} = 10% : 45%: 45%
(4) SiO₂ : SiN_{4/3} : MN_{2/3} = 15% : 40%: 45%.

5. Phosphor according to Claim 1, **characterized in that** the proportion of the activator D in M is in the range of 0.1 to 15 mol%.

6. Phosphor according to Claim 1, **characterized in that** the stabilized phosphor has the stoichiometry (1-a-b) (M₂Si₅N₈:D)*a(SiO₂)*b(M'₃N₂).

7. Light source, in particular conversion LED, comprising a phosphor according to Claim 1.

8. Conversion LED according to Claim 7, **characterized in that** the conversion LED emits white.

9. Conversion LED according to Claim 7, **characterized in that** the phosphor is excited by means of a radiation whose peak is in the range of 410 to 500 nm, in particular 430 to 465 nm.

10. Conversion LED according to Claim 7, **characterized in that** the dominant emission wavelength of the phosphor is in the range of 595 to 610 nm.

11. Conversion LED according to Claim 7, **characterized in that** a second phosphor, which emits in the yellow-green, is used for a white-emitting LED.

12. Conversion LED according to Claim 7, **characterized in that** the phosphor is integrated into the LED, in particular is introduced in a potting compound placed in front of a chip.

13. Conversion LED according to Claim 7, **characterized in that** the phosphor is applied separately to a carrier.

14. Conversion LED according to Claim 7, **characterized in that** the chip emits primary radiation in the UV to blue range, in particular in the range of 360 nm to 480 nm, if appropriate at least one further phosphor also being used.

15. Method for producing a red-emitting phosphor from the class of nitridosilicates which is doped with an activator D and which is a modified doped alkaline earth metal nitridosilicate M₂Si₅N₈ where M = one or more elements from the group Sr, Ca, Ba, and where M' = one or more elements from the group Sr, Ca, Ba, the nitridosilicate being stabilized either by an oxidic phase SiO₂ alone or in combination with M'₃N₂, where M' = one or more alkaline earth metal elements from the group Sr, Ca, Ba, as an oxynitridic phase, **characterized in that** the starting materials M₃N₂, Si₃N₄, SiO₂ and, if appropriate, M'₃N₂ and also a precursor of the activator D are annealed in a reducing atmosphere at temperatures of at least 1200°C.

## Revendications

1. Substance fluorescente émettant en rouge issue de la classe des silicates nitrurés, qui est dopée avec au moins un activateur D, en particulier Eu, **caractérisée en ce qu'**il s'agit d'un silicate nitruré alcalinoterreux M₂Si₅N₈ dopé à D modifié avec M = un ou plusieurs éléments issus du groupe Sr, Ca, Ba, le silicate nitruré étant stabilisé par le biais d'une phase d'oxydation avec SiO₂ seul ou en combinaison avec M'₃N₂, avec M' = un ou plusieurs éléments alcalinoterreux issus du groupe Sr, Ca, Ba, en tant que phase d'oxynitruration.

2. Substance fluorescente selon la revendication 1, **caractérisée en ce que** M représente plus de 50 % en moles par l'intermédiaire de Sr.

3. Substance fluorescente selon la revendication 1, **caractérisée en ce que** les parts relatives dans un triangle de phases SiN_{4/3}, SiO₂, MN_{2/3} se situent dans une plage ayant les points d'angle suivants :
(1) SiO₂ : SiN_{4/3} : MN_{2/3} = 7,5 % : 67,5 % : 25 %
(2) SiO₂ : SiN_{4/3} : MN_{2/3} = 17,5 % : 57,5 % : 25 %
(3) SiO₂ : SiN_{4/3} : MN_{2/3} = 7,5 % : 47,5 % : 45 %
(4) SiO₂ : SiN_{4/3} : MN_{2/3} = 17,5 % : 37,5 % : 45 %.

4. Substance fluorescente selon la revendication 1, **caractérisée en ce que** les parts relatives dans un triangle de phases SiN_{4/3}, SiO₂, MN_{2/3} se situent dans une plage ayant les points d'angle suivants :
(1) SiO₂ : SiN_{4/3} : MN_{2/3} = 10 % : 65 % : 25 %
(2) SiO₂ : SiN_{4/3} : MN_{2/3} = 15 % : 60 % : 25 %
(3) SiO₂ : SiN_{4/3} : MN_{2/3} = 10 % : 45 % : 45 %
(4) SiO₂ : SiN_{4/3} : MN_{2/3} = 15 % : 40 % : 45 %.

5. Substance fluorescente selon la revendication 1, **caractérisée en ce que** la part de l'activateur D pour M se situe dans la plage de 0,1 à 15 % en moles.

6. Substance fluorescente selon la revendication 1, **caractérisée en ce que** la substance fluorescente stabilisée présente la stoechiométrie (1-a-b) (M₂Si₅N₈ : D) *a(SiO₂) *b(M'₃N₂).

7. Source de lumière, notamment LED à conversion, comprenant une substance fluorescente selon la revendication 1.

8. LED à conversion selon la revendication 7, **caractérisée en ce que** la LED à conversion émet en blanc.

9. LED à conversion selon la revendication 7, **caractérisée en ce que** la substance fluorescente est excitée au moyen d'un rayonnement, dont le pic se situe dans la plage de 410 à 500 nm, en particulier de 430 à 465 nm.

10. LED à conversion selon la revendication 7, **caractérisée en ce que** la longueur d'onde d'émission dominante de la substance fluorescente se situe dans la plage de 595 à 610 nm.

11. LED à conversion selon la revendication 7, **caractérisée en ce que** pour une LED émettant en blanc une deuxième substance fluorescente qui émet en jaune-vert est utilisée.

12. LED à conversion selon la revendication 7, **caractérisée en ce que** la substance fluorescente est intégrée dans la LED, notamment introduite dans une masse de remplissage qui est installée devant une puce.

13. LED à conversion selon la revendication 7, **caractérisée en ce que** la substance fluorescente est appliquée séparément sur un support.

14. LED à conversion selon la revendication 7, **caractérisée en ce que** la puce émet un rayonnement primaire dans la plage UV allant jusqu'au bleu, notamment dans la plage de 360 nm à 480 nm, le cas échéant encore au moins une autre substance fluorescente étant utilisée.

15. Procédé de fabrication d'une substance fluorescente émettant en rouge issue de la classe des silicates nitrurés, qui est dopée avec un activateur D et qui est un silicate nitruré alcalinoterreux M₂Si₅N₈ dopé modifié avec M = un ou plusieurs éléments issus du groupe Sr, Ca, Ba, et avec M' = un ou plusieurs éléments issus du groupe Sr, Ca, Ba, le silicate nitruré étant stabilisé par le biais d'une phase d'oxydation avec SiO₂ seul ou en combinaison avec M'₃N₂, avec M' = un ou plusieurs éléments alcalinoterreux issus du groupe Sr, Ca, Ba, en tant que phase d'oxynitruration, **caractérisé en ce que** les éduits M₃N₂, Si₃N₄, SiO₂ et le cas échéant M'₃N₂ ainsi qu'un précurseur de l'activateur D sont calcinés sous une atmosphère réductrice à des températures d'au moins 1200°C.
